# EUROPÄISCHE PATENTSCHRIFT

(11) **EP 0 467 178 B1**
(45) Veröffentlichungstag und Bekanntmachung des Hinweises auf die Patenterteilung: **09.10.1996**
(21) Anmeldenummer: 91111280.3
(22) Anmeldetag: 06.07.1991
(51) Int. Cl.: C08F 255/02, C08F 8/46, C08F 8/42

(54) **Gepfropfte und vernetzte Propylencopolymerisate**
Grafted and crosslinked propylene copolymer
Copolymère de propylène greffé et réticulé

(30) Priorität: 16.07.1990 DE 4022570; 16.07.1990 DE 4022569
(43) Veröffentlichungstag der Anmeldung: 22.01.1992
(73) Patentinhaber: BASF Aktiengesellschaft, 67063 Ludwigshafen (DE)
(72) Erfinder: Schwager, Harald, Dr., W-6720 Speyer (DE); Muehlenbernd, Thomas, Dr., W-6900 Heidelberg (DE); Marczinke, Bernd Lothar, Dr., W-6720 Speyer (DE); Kerth, Juergen, Dr., W-6719 Carlsberg (DE); Mueller, Hans-Joachim, Dr., W-6718 Gruenstadt (DE)

(56) Entgegenhaltungen:
- EP-A- 0 268 294
- EP-A- 0 280 454

## Beschreibung

Die vorliegende Erfindung betrifft mit α,β-ethylenisch ungesättigten Carbonsäuren bzw. Carbonsäurederivaten vernetzte Propylencopolymerisate mit bis zu 35 Gew.-% anderer C₂- bis C₁₀-Alk-1-ene, erhältlich durch Umsetzung des zu pfropfenden Monomeren mit einem Propylencopolymerisat bei Drücken von 1 bis 500 bar, wobei man in Abwesenheit eines radikalisch zerfallenden Initiators 0,01 bis 1,0 Gew.-%, bezogen auf das Propylencopolymerisat, des zu pfropfenden Monomeren, dem aufgeschmolzenen Propylencopolymerisat hinzumischt und die Pfropfreaktion bei Temperaturen von 210 bis 350°C durchführt. Die so erhältlichen gepropften Propylencopolymerisate werden danach mit organischen Vernetzungsmitteln bei Drücken von 1-500 bar und Temperaturen von 210 bis 350°C umgesetzt.

Außerdem betrifft die Erfindung ein Verfahren zur Herstellung dieser gepfropften, durch Zumischen von organischen Vernetzungsmitteln erhältlichen vernetzten Propylencopolymerisate.

Pfropfcopolymere können dadurch hergestellt werden, daß man das zu pfropfende Polymerisat zunächst mit Peroxiden umsetzt und anschließend mit geeigneten Monomeren in Kontakt bringt (US-A 3 862 265, US-A 3 953 655, US 4 001 172). Durch die Behandlung mit den als Initiatoren wirkenden Peroxiden bilden sich zunächst Radikale an der Polymerkette, an die sich in der darauf folgenden Pfropfreaktion Monomere anlagern können.

Weiterhin sind Verfahren bekannt, in welchen Homo- oder Copolymerisate des Ethylens zunächst durch eine von organischen Peroxiden initiierte Reaktion mit ungesättigten Carbonsäuren und/oder deren Estern bzw. Anhydriden gepfropft und anschließend mit multifunktionellen Aminen oder Alkoholen umgesetzt werden (DE-A 26 27 785, EP-A 50 994, US-A 4 089 794, US-A 4 137 185, US-A 4 161 452, US-A 4 382 128). Dabei entstehen in der Regel vernetzte Produkte, die zwar sehr stabil sind, sich aber aufgrund ihres geringen Schmelzflusses thermisch nicht mehr mit den in der Kunststofftechnik üblichen Methoden verarbeiten lassen.

Des weiteren sind Verfahren zur Herstellung von gepfropften oder vernetzten Polypropylenen beschrieben, die aber teilweise erhebliche Mängel aufweisen. So führt beispielsweise der Einsatz von Peroxiden bei Pfropfungs- und Vernetzungsreaktionen zu einem Molmassenabbau, der die mechanischen Eigenschaften des dabei erhältlichen Produktes deutlich verschlechtert [J. Appl. Poly. Sci., Vol 32, 5431-5437 (1986)]. Eine andere Möglichkeit der vernetzung von Polypropylenen besteht darin, diese mit Vinylsilanen zunächst zu pfropfen und anschließend unter Verwendung eines organischen Zinnkatalysators durch Kondensation mit Wasserdampf zu vernetzen (DE-A 3 520 106, US-A 3 328 339). Dieses Verfahren ist aber sehr aufwendig, da die meist toxischen Zinnkatalysatoren nur schwierig aus dem Produkt entfernt werden können. Außerdem werden dabei sämtliche, für die Haftung der Polymerschmelze auf polaren Substraten erforderlichen Silangruppen beim Abkühlen durch Wasser hydrolysiert, was zur Folge hat, daß Mehrschichtenverbunde praktisch nicht mehr hergestellt werden können. Aus der FR 25 72 417 ist ferner ein Verfahren bekannt, bei welchem Polypropylen durch Reaktion mit organischen Peroxiden und ungesättigten Carbonsäureanhydriden gepfropft werden kann. Das auf diese Weise erhältlich gepfropfte Polypropylen kann anschließend mit multifunktionellen Aminen zu vernetzten Materialien umgesetzt werden.

In der EP-A 280 454 wird ein Verfahren zur Pfropfung von geschmolzenen polymerisaten beschrieben, wobei u.a. auch Polymerisate des Proyplens aufgeführt werden. Die dabei erhaltenen gepfropften Polymerisate können direkt weiterverarbeitet werden.

Nach dem Stand der Technik führen Pfropfreaktionen bei Polypropylenen nur dann zu Produkten mit guten mechanischen Eigenschaften, wenn die Reaktion mit Hilfe von Peroxiden initiiert wird. Die Verwendung von Peroxiden bei Pfropfreaktionen ist jedoch mit einer Reihe von Nachteilen verbunden. Verwendet man beispielsweise das zu pfropfende Monomer in relativ kleinen Konzentrationen, so sind zur Erreichung eines praktisch vollständigen Umsatzes relativ hohe Peroxidkonzentrationen nötig. Der Einsatz von hohen Peroxidkonzentrationen bei der Pfropfung von Polypropylenen führt aber in der Regel zu einem starken Molmassenabbau und zu einer Verringerung der Haftfähigkeit gegenüber polaren Substanzen, z.B. Metallen oder Polyamiden, so daß das entstehende Polymerisat keine befriedigenden anwendungstechnischen Eigenschaften aufweist. Weiterhin werden Polyolefine durch den Peroxideinsatz bei Pfropfreaktionen häufig in ihrer Farbe und ihrem Geruch beeinträchtigt. Außerdem stehen dem Einsatz von Peroxiden in der Technik erhebliche sicherheitstechnische Bedenken entgegen.

Der vorliegenden Erfindung lag daher die Aufgabe zugrunde, den geschilderten Nachteilen abzuhelfen und vernetzte Polymerisate des Propylens mit verbesserten anwendungstechnischen Eigenschaften und ohne Mitverwendung von Peroxiden zu entwickeln, welche gegebenenfalls mit organischen Vernetzungsmitteln zu vernetzten oder vernetzbaren Polymerisaten weiter umgesetzt werden können.

Demgemäß wurden die eingangs definierten. mit ethylenisch ungesättigten Carbonsäuren bzw. Carbonsäurederivaten vernetzte Propylencopolymerisate gefunden.

Bei dem, zu den erfindungsgemäßen Polymerisaten führenden Verfahren werden als Pfropfmonomere α,β-ungesättigte Carbonsäuren bzw. Carbonsäurederivate verwendet. Unter α,β-ungesättigten Carbonsäuren bzw. Carbonsäurederivaten sollen dabei die üblichen mit Propylen copolymerisierbaren Carbonsäuren, sowie deren Ester-, Anhydrid- oder Amidderivate verstanden werden. Bevorzugt werden u.a. Maleinsäure, Fumarsäure, Itaconsäure, Acrylsäure, Crotonsäure oder deren Anhydride eingesetzt, wobei Maleinsäureanhydrid besonders geeignet ist.

Das zu pfropfende Monomer wird bei dem zu den erfindungsgemäßen Polymerisaten führenden Verfahren mit Propylencopolymerisaten mit bis zu 35 Gew.-% anderer C₂- bis C₁₀-Alk-1-ene umgesetzt.

Unter Propylencopolymerisaten versteht man dabei zum einen Copolymerisate mit 40 bis 95 Gew.-% aus einem Propylenhomopolymerisat und 5 bis 60 Gew.-% aus einem statistischen Propylencopolymerisat mit einpolymerisierten C₂- bis C₁₀-Alk-1-enen, z.B. von Ethylen, But-1-en, Pent-1-en, Hex-1-en, Hept-1-en oder Oct-1-en, wobei bevorzugt Ethylen oder But-1-en verwendet werden. Besonders geeignet sind dabei solche Propylencopolymerisate, die neben 40 bis 90 Gew.-% Propylenhomopolymerisat noch 10 bis 60 Gew.-% statistisches Propylencopolymerisat mit einpolymerisierten C₂- bis C₁₀-Alk-1-enen enthalten, wobei der Comonomeranteil nicht mehr als 35 Gew.-%, vorzugsweise 2 bis 30 Gew.-%, bezogen auf das Gesamtpolymerisat, beträgt. Zum anderen versteht man unter den erfindungsgemäß einzusetzenden Propylencopolymerisaten statistisch verteilte Propylencopolymerisate mit bis zu 20 Gew.-% anderer C₂- bis C₁₀-Alk-1-ene. Bevorzugt sind dabei Copolymerisate des Propylens, bei denen der Gehalt an Comonomeren nicht mehr als 15 Gew.-% beträgt. Als C₂- bis C₁₀-Alk-1-ene werden dabei insbesondere Ethylen, But-1-en, Pent-1-en, Hex-1-en, Hept-1-en oder Oct-1-en verwendet, wobei bei der Herstellung dieser Copolymerisate die C₂- bis C₁₀-Alk-1-ene sowohl einzeln als auch als Gemische zusammen mit dem Propylen copolymerisiert werden können. Zur Herstellung der erfindungsgemäßen Polymerisate werden insbesondere statistisch verteilte Propylen-Ethylen-Copolymerisate und statistisch verteilte Propylen-Ethylen-But-1-en-Copolymerisate eingesetzt, deren Comonomerengehalte nicht mehr als 10 Gew.-% betragen.

Die Herstellung dieser Propylencopolymerisate erfolgt durch Polymerisation mit Hilfe von Ziegler-Natta-Katalysatoren. Diese enthalten u.a. neben einer titanhaltigen Feststoffkomponente noch einen Cokatalysator. Als Cokatalysator kommt dabei eine Aluminiumverbindung in Frage. Vorzugsweise wird neben dieser Aluminiumverbindung als weiterer Bestandteil des Cokatalysators noch eine Elektronendonorverbindung eingesetzt. Die Polymerisation erfolgt dabei in den, in der Technik üblicherweise für Polymerisationsreaktionen verwendeten Reaktoren, vorzugsweise in der Gasphase.

Zur Herstellung der titanhaltigen Feststoffkomponente werden als Titanverbindungen im allgemeinen Halogenide oder Alkoholate des drei- oder vierwertigen Titans verwendet, wobei die Chloride des Titans, insbesondere Titantetrachlorid, bevorzugt sind. Vorteilhaft enthält die titanhaltige Feststoffkomponente einen feinteiligen Träger, wofür sich Silicium- und Aluminiumoxide, sowie Aluminiumsilicate der Bruttoformel SiO₂·aAl₂O₃, wobei a für einen Wert von 0,001 bis 2, insbesondere von 0,01 bis 0,5 steht, gut bewährt haben.

Die bevorzugt verwendeten Träger weisen ein Teilchendurchmesser von 0,1 bis 1000 µm, insbesondere von 10 bis 300 µm, ein Porenvolumen von 0,1 bis 10 cm³/g, insbesondere von 1,0 bis 5,0 cm³/g und eine spezifische Oberfläche von 10 bis 1000 m²/g, insbesondere von 100 bis 500 m²/g auf.

Weiter werden bei der Herstellung der titanhaltigen Feststoffkomponente u.a. Verbindungen des Magnesiums eingesetzt. Als solche kommen insbesondere Magnesiumhalogenide, Magnesiumalkyle und Magnesiumaryle, sowie Magnesiumalkoxy- und Magnesiumaryloxyverbindungen in Betracht, wobei bevorzugt Magnesiumdichlorid, Magnesiumdibromid und Magnesiumdi-(C₁-C₁₀-alkyl)-Verbindungen verwendet werden. Daneben kann die titanhaltige Feststoffkomponente noch Halogen, bevorzugt Chlor oder Brom, enthalten.

Ferner enthält die titanhaltige Feststoffkomponente noch Elektronendonorverbindungen, beispielsweise mono- oder polyfunktionelle Carbonsäuren, Carbonsäureanhydride und Carbonsäureester, ferner Ketone, Ether, Alkohole, Lactone, sowie phosphor- und siliciumorganische Verbindungen. Bevorzugt werden als Elektronendonorverbindungen innerhalb der titanhaltigen Feststoffkomponente Phthalsäurederivate der allgemeinen Formel I 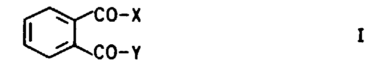 verwendet, wobei X und Y jeweils für ein Chloratom oder einen C₁- bis C₁₀-Alkoxyrest oder gemeinsam für Sauerstoff stehen. Besonders bevorzugte Elektronendonorverbindungen sind Phthalsäureester, wobei X und Y einen C₁-C₈-Alkoxyrest, beispielsweise einen Methoxy-, Ethoxy-, Propyloxy- oder einen Butyloxyrest bedeuten.

Weiter bevorzugte Elektronendonorverbindungen innerhalb der titanhaltigen Feststoffkomponente sind u.a. Diester von 3- oder 4-gliedrigen, gegebenenfalls substituierten Cycloalkyl-1,2-dicarbonsäuren, sowie Monoester von, gegebenenfalls substituierten Benzophenon-2-carbonsäuren. Als Hydroxyverbindungen werden bei diesen Estern die bei Veresterungsreaktionen üblichen Alkohole verwendet, u.a. C₁- bis C₁₅-Alkanole, C₅- bis C₇-Cycloalkanole, die ihrerseits C₁- bis C₁₀-Alkylgruppen tragen können, ferner C₆- bis C₁₀-Phenole.

Die titanhaltige Feststoffkomponente kann nach an sich bekannten Methoden hergestellt werden. Beispiele dafür sind u.a. in der EP-A 45 975, der EP-A 45 977, der EP-A 86 473, der EP-A 171 200, der GB-A 2 111 066 und der US-A 4 857 613 beschrieben.

Bei der Herstellung der titanhaltigen Feststoffkomponente wird bevorzugt folgendes dreistufige Verfahren angewandt:

In der ersten Stufe versetzt man zunächst einen feinteiligen Träger, bevorzugt Siliciumdioxid oder SiO₂·aAl₂O₃ - wobei a für eine Zahl im Bereich von 0,001 bis 2, insbesondere im Bereich von 0,01 bis 0,5 steht - mit einer Lösung der magnesiumhaltigen Verbindung in einem flüssigen Alkan, wonach man dieses Gemisch 0,5 bis 5 Stunden lang bei einer Temperatur zwischen 10 und 120°C rührt. Vorzugsweise setzt man pro Mol des Trägers 0,1 bis 1 mol der Magnesiumverbindung ein. Anschließend fügt man unter ständigem Rühren ein Halogen oder einen Halogenwasserstoff, insbesondere Chlor oder Chlorwasserstoff im wenigstens zweifachen, bevorzugt im wenigstens fünffachen molaren überschuß, bezogen auf die magnesiumhaltige Verbindung, hinzu. Nach etwa 30 bis 120 Minuten trennt man den Feststoff von der flüssigen Phase ab.

In der zweiten Stufe bringt man das auf diese Weise erhaltene Produkt in ein flüssiges Alkan ein und fügt danach ein C₁- bis C₈-Alkanol, insbesondere Ethanol, ein Halogenid oder ein Alkoholat des drei- oder vierwertigen Titans, insbesondere Titantetrachlorid, sowie eine Elektronendonorverbindung hinzu. Dabei setzt man pro Mol Magnesium des aus der ersten Stufe erhaltenen Feststoffs 1 bis 5 mol, insbesondere 2 bis 4 mol, Alkanol, 2 bis 20 mol, insbesondere 4 bis 10 mol, des drei- oder vierwertigen Titans und 0,01 bis 1 mol, insbesondere 0,1 bis 1,0 mol, der Elektronendonorverbindung ein. Dieses Gemisch wird wenigstens eine Stunde lang bei einer Temperatur zwischen 10 und 150°C gerührt, der so erhaltene feste Stoff anschließend abfiltriert und mit einem flüssigen Alkan, bevorzugt mit Hexan oder Heptan, gewaschen.

In der dritten Stufe extrahiert man den aus der zweiten Stufe erhaltenen Feststoff einige Stunden lang bei Temperaturen zwischen 100 und 150°C mit überschüssigem Titantetrachlorid oder einer im Überschuß vorliegenden Lösung von Titantetrachlorid in einem inerten Lösungsmittel, vorzugsweise einem Alkylbenzol, wobei das Lösungsmittel wenigstens 5 Gew.-% Titantetrachlorid enthält. Danach wäscht man das Produkt solange mit einem flüssigen Alkan, bis der Gehalt der Waschflüssigkeit an Titantetrachlorid weniger als 2 Gew.-% beträgt.

Die auf diese Weise erhältliche titanhaltige Feststoffkomponente wird mit Cokatalysatoren als Ziegler-Natta-Katalysatorsystem verwendet. Als Cokatalysatoren kommen dabei Aluminiumverbindungen und weitere Elektronendonorverbindungen in Frage.

Als Cokatalysator geeignete Aluminiumverbindungen sind neben Trialkylaluminium auch solche Verbindungen, bei denen eine Alkylgruppe durch eine Alkoxygruppe oder durch ein Halogenatom, beispielsweise durch Chlor oder Brom, ersetzt ist. Bevorzugt werden Trialkylaluminiumverbindungen verwendet, deren Alkylgruppen jeweils 1 bis 8 C-Atome aufweisen, beispielsweise Trimethyl-, Triethyl- oder Methyldiethylaluminium.

Bevorzugt verwendet man neben der Aluminiumverbindung noch als weiteren Cokatalysator Elektronendonorverbindungen wie beispielsweise mono- oder polyfunktionelle Carbonsäuren, Carbonsäureanhydride und Carbonsäureester, ferner Ketone, Ether, Alkohole, Lactone, sowie phosphor- und siliciumorganische Verbindungen. Bevorzugte Elektronendonorverbindungen sind dabei siliciumorganische Verbindungen der allgemeinen Formel II

R¹ ₙSi(OR²)₄₋ₙ II,

wobei
R¹ gleich oder verschieden ist und eine C₁- bis C₂₀-Alkylgruppe, eine 5- bis 7-gliedrige Cycloalkylgruppe, die ihrerseits eine C₁- bis C₁₀-Alkylgruppe tragen kann, oder eine C₆- bis C₂₀-Aryl- oder Arylalkylgruppe bedeutet, R² gleich oder verschieden ist und eine C₁- bis C₂₀-Alkylgruppe bedeutet und n für die Zahlen 1, 2 oder 3 steht. Besonders bevorzugt werden dabei solche Verbindungen, in denen R¹ eine C₁- bis C₈-Alkylgruppe oder eine 5- bis 7-gliedrige Cycloalkylgruppe, sowie R² eine C₁- bis C₄-Alkylgruppe bedeutet und n für die Zahlen 1 oder 2 steht.

Unter diesen Verbindungen sind insbesondere Dimethoxydiisopropylsilan, Dimethoxyisobutylisopropylsilan, Dimethoxydiisobutylsilan, Dimethoxydicyclopentylsilan und Diethoxyisobutylisopropylsilan hervorzuheben.

Bevorzugt werden solche Katalysatorsysteme verwendet, bei denen das Atomverhältnis zwischen Aluminium aus der Aluminiumverbindung und Titan aus der titanhaltigen Feststoffkomponente 10:1 bis 800:1, insbesondere 20:1 bis 200:1, und das Molverhältnis zwischen der Aluminiumverbindung und der als Cokatalysator eingesetzten Elektronendonorverbindung 1:1 bis 100:1, insbesondere 2:1 bis 80:1 beträgt. Die einzelnen Katalysatorbestandteile können in beliebiger Reihenfolge einzeln oder als Gemisch zweier Komponenten in das Polymerisationssystem eingebracht werden.

Die zur Darstellung der erfindungsgemäßen, gepfropften Polymerisate benötigten Propylencopolymerisate lassen sich zum einen in einem zweistufigen Verfahren herstellen, wobei in einer ersten Polymerisationsstufe Propylen polymerisiert wird und diesem Polymerisat anschließend in einer zweiten Polymerisationsstufe ein Gemisch aus Propylen und einem oder mehreren C₂-C₁₀-Alk-1-enen hinzupolymerisiert wird.

Die Polymerisation des Propylens wird in der ersten Polymerisationsstufe bei einem Druck von 20 bis 40 bar, einer Temperatur von 60 bis 90°C und einer mittleren Verweilzeit des Reaktionsgemisches von 1 bis 5 Stunden durchgeführt. Bevorzugt sind dabei Drücke von 20 bis 35 bar, Temperaturen von 65 bis 85°C und mittlere Verweilzeiten von 1,5 bis 4 Stunden. Man wählt die Reaktionsbedingungen üblicherweise so, daß in der ersten Polymerisationsstufe pro mmol der Aluminiumkomponente 0,05 bis 2 kg, bevorzugt 0,1 bis 1,5 kg, Polypropylen gebildet werden.

Dieses Polypropylen wird nach Beendigung der Reaktion mit dem Katalysator aus der ersten Polymerisationsstufe ausgetragen und in die zweiten Polymerisationsstufe eingeführt, wo diesem ein Gemisch von Propylen und einem oder mehreren C₂-C₁₀-Alk-1-enen, insbesondere Ethylen oder But-1-en hinzupolymerisiert wird. Der in der zweiten Polymerisationsstufe vorherrschende Druck liegt 7, bevorzugt 10 bar, unter dem der ersten Polymerisationsstufe und beträgt 5 bis 30, vorzugsweise 10 bis 25 bar. Die Temperatur liegt bei 30 bis 100, bevorzugt bei 35 bis 80°C und die mittlere Verweilzeit des Polymerisats beträgt 1 bis 5 Stunden, bevorzugt 1,5 bis 4 Stunden.

In der zweiten Polymerisationsstufe liegt das Verhältnis der Partialdrücke zwischen Propylen und dem oder den C₂-C₁₀-Alk-1-enen üblicherweise im Bereich von 0,5 : 1 bis 5 : 1, insbesondere im Bereich von 1 : 1 bis 4 : 1. Bevorzugt wird dabei das Gewichtsverhältnis zwischen den in der ersten und den in der zweiten Polymerisationsstufe umgesetzten Monomeren so bemessen, daß es in einem Bereich von 1 : 1 bis 20 : 1, insbesondere im Bereich von 2 : 1 bis 15 : 1, liegt.

Daneben besteht noch die Möglichkeit, dem Reaktionsgemisch in der zweiten Polymerisationsstufe ein C₁- bis C₈-Alkanol, insbesondere ein C₁- bis C₄-Alkanol, hinzuzufügen, welches die Aktivität des Ziegler-Natta-Katalysators beeinflußt. Dafür gut geeignete Alkanole sind u.a. Methanol, Ethanol, n-Propanol, n-Butanol und ganz besonders Isopropanol. Die Menge des hinzugefügten C₁- C₈-Alkanols wird dabei zweckmäßigerweise so bemessen, daß das Molverhältnis zwischen der Aluminiumverbindung und dem C₁-C₈-Alkanol 0,1:1 bis 10:1, insbesondere 0,2:1 bis 5:1 beträgt. Durch geeignete Wahl der Reaktionsparameter sollte ferner darauf geachtet werden, daß das Gewichtsverhältnis zwischen den in der ersten und den in der zweiten Polymerisationsstufe umgesetzten Monomeren 1 : 1 bis 20 : 1, insbesondere 1,5 : 1 bis 15 : 1, beträgt.

Zum anderen lassen sich die zur Darstellung der erfindungsgemäßen, ge-pfropften Polymerisate benötigten Propylencopolymerisate durch statistische Copolymerisation herstellen. Die Copolymerisation des Propylens und der als Comonomere eingesetzten C₂-C₁₀-Alk-1-ene erfolgt dabei vorzugsweise in einem Reaktor in Abwesenheit eines flüssigen Reaktionsmediums bei einem Druck von 20 bis 40 bar, einer Temperatur von 60 bis 90°C und einer mittleren Verweilzeit des Polymerisats von 1 bis 5 Stunden. Bevorzugt ist dabei ein Verfahren, wo das Verhältnis der Partialdrücke zwischen Propylen und den C₂-C₁₀-Alk-1-enen auf 5:1 bis 100:1 eingestellt wird. Als Reaktoren können dabei die in der Polymerisationstechnik üblichen Apparaturen eingesetzt werden.

Die erfindungsgemäßen, gepfropften Propylencopolymerisate werden nach einem Verfahren hergestellt, bei welchem man bei Drücken von 1 bis 500 bar, vorzugsweise bei Drücken von 1 bis 300 bar, in Abwesenheit eines radikalisch zerfallenden Initiators 0,01 bis 1,0 Gew.-%, bezogen auf das Propylencopolymerisat, des zu pfropfenden Monomeren, dem aufgeschmolzenen Propylencopolymerisat hinzumischt und die Pfropfreaktion bei Temperaturen von 210 bis 350°C durchführt. Vorzugsweise wird das zu pfropfende Monomere dabei in Konzentrationen von 0,01 bis 0,5, insbesondere von 0,01 bis 0,4 Gew.-%, jeweils bezogen auf das Propylencopolymerisat, eingesetzt. Die Pfropfreaktion läßt sich vorteilhaft bei Temperaturen von 210 bis 290°C, insbesondere bei Temperaturen von 210 bis 260°C und Verweilzeiten von 0,5 bis 10, insbesondere von 0,5 bis 5 Minuten, durchführen.

Bei der peroxidfreien Pfropfung der Propylencopolymerisate können die in der Kunststofftechnik üblichen Reaktoren, beispielsweise Extruder oder Brabender-Mischer eingesetzt werden. Besonders gut eignen sich dabei Zweischneckenextruder. In einer bevorzugten Ausführungsform dosiert man das Propylencopolymerisat zusammen mit dem zu pfropfenden Monomeren in Abwesenheit eines organischen Peroxids in den Einzug eines Zweischneckenextruders, wo das Gemisch zunächst bei etwa 170 bis 180°C aufgeschmolzen und anschließend bei 210 bis 350°C 0,5 bis 5 Minuten lang gepfropft wird. Bevorzugt wird dabei das zu pfropfende Monomere im flüssigen Zustand hinzugefügt, wobei dieses vorher erwärmt wird. Das zu pfropfende Monomere kann auch nach dem Aufschmelzen des Propylencopolymerisats in den Extruder gegeben werden. Zweckmäßig werden nach Beendigung der Pfropfreaktion in zwei, dem Einzugsbereich des Extruders sich anschließenden Entgasungszonen Spuren der nicht umgesetzten, zu pfropfenden Monomere entfernt.

Die auf diese Weise erhältlichen gepfropften Propylencopolymerisate enthalten üblicherweise 0,01 bis 1,0 Gew.-% des zu pfropfenden Monomeren. Sie weisen gute anwendungstechnische Eigenschaften, insbesondere eine hohe Haftfestigkeit gegenüber polaren Substanzen, beispielsweise gegenüber Metallen oder Polyamiden auf. Ihre Fließfähigkeit hat sich im Vergleich zu dem nicht gepfropften Propylencopolymerisat kaum verändert, da bei der Pfropfreaktion aufgrund des peroxidfreien Verfahrens praktisch kein Molmassenabbau stattfindet. Sie sind farb- und geruchlos und weisen nur geringe Restmonomergehalte auf. Ihre Schmelzflußindizes liegen im Bereich von 1 bis 100 g/10 min, vorzugsweise im Bereich von 2 bis 50 g/10 min, jeweils gemessen nach DIN 53 735 bei 230°C und 2,16 kg. Der Schmelzflußindex entspricht dabei der Menge an Polymerisat, die innerhalb von 10 Minuten aus der nach DIN 53 735 genormten Prüfvorrichtung bei einer Temperatur von 230°C und unter einem Gewicht von 2,16 kg ausgepreßt wird.

Die erfindungsgemäßen Propylencopolymerisate eignen sich u.a. für die Hohlkörperextrusion und den Spritzgußsektor. Aufgrund ihres Eigenschaftsprofils ist insbesondere auch ein Einsatz als Haftvermittler, als Beschichtungsfolie sowie als Grundbaustein bei der Herstellung von Ionomeren möglich. Dabei werden die freien oder durch Hydrolyse zugänglichen Carboxylgruppen des erfindungsgemäßen, gepfropften Propylencopolymerisats mit anorganischen Basen oder Salzen zu den entsprechenden ionisierten Polymerisaten, sogenannten Ionomeren, umgesetzt. Geeignet sind dabei vor allem Alkaliverbindungen sowie Salze von Alkalimetallen, Erdalkalimetallen oder verbindungen des Zinks mit organischen Säuren (US-A 3 264 272, US-A 3 437 718).

Dabei weisen Ionomere, die aus Salzen mehrwertiger Metalle, wie Magnesium, Calcium oder Zink hergestellt werden, im allgemeinen geringere xylollösliche Anteile auf als die entsprechenden Ionomeren, die aus Salzen einwertiger Metalle, wie Natrium oder Kalium hergestellt werden.

Wegen ihrer guten anwendungstechnischen Eigenschaften werden die peroxidfreien Propylencopolymerisate mit organischen Vernetzungsmitteln zu neuen, vernetzten Polymerisaten verarbeitet. Dabei werden die gepfropften Propylencopolymerisate mit organischen Vernetzungsmitteln bei Drücken von 1 bis 500 bar und Temperaturen von 210 bis 350°C umgesetzt. Bevorzugt sind bei der Vernetzungsreaktion Drücke von 1 bis 300 bar und Temperaturen von 210 bis 280°C, insbesondere von 210 bis 260°C. Als organische Vernetzungsmittel kommen dabei die bei Vernetzungsreaktionen üblichen Substanzen in Frage, insbesondere mehrwertige primäre oder sekundäre Amine, Aminoalkohole, Alkohole oder Epoxidgruppen enthaltende Verbindungen. Bevorzugt werden dabei Verbindungen, die mindestens 2 C-Atome enthalten, beispielsweise Ethylendiamin, Diethylentriamin, Triethylentetramin, Diethanolamin, Triethanolamin, Dipropanolamin, Tripropanolamin, Ethylenaminoethylamin, Dimethylethylendiamin, Diethylaminopropylamin, Dimethylneopentandiamin, 1,8-Octandiamin, 4,7-Dioxadecan-1.10-diamin, Polytetrahydrofuran-α-ω-diamin, Dimethyldipropylentriamin, Neopentandiamin, Dimethylaminobutanol, Dodecylamin, Hexamethylendiamin, Diethanolamin, N,N-Diethylaminopropylamin, 1.4.-Bis-[2,3-epoxy-propyloxy]-benzol, Bis-[2,3-epoxy-propyl]-ether oder 1,2 : 5,6-Bis-epoxy-hexan.

Das organische Vernetzungsmittel wird dabei üblicherweise in Mengen von 0,5 bis 500 mol-%, vorzugsweise in Mengen von 1 bis 300 mol-%, bezogen auf den Gehalt des gepfropften Comonomeren dem Propylencopolymerisat hinzugefügt.

Weiterhin besteht die Möglichkeit, Pfropfung und Vernetzung in einem einzigen Verarbeitungsschritt und in einer Mischeinrichtung durchzuführen, was verfahrenstechnisch erheblich weniger aufwendig ist.

Die Vernetzungsreaktion kann in den in der Kunststofftechnik üblichen Reaktoren beispielsweise in Extrudern oder in Brabender-Mischern durchgeführt werden, wobei sich Zweischneckenextruder dafür besonders gut eignen. In einer bevorzugten Ausführungsform wird das organische Vernetzungsmittel dem aufgeschmolzenen gepfropften Propylencopolymerisat in der dem Einzug des Reaktors nachgelagerten Reaktionszone hinzugefügt. Dabei kann das organische Vernetzungsmittel sowohl kalt, als auch im geschmolzenen Zustand oder als Lösung in einem inerten Lösungsmittel in den Reaktor gegeben werden. Die Verweilzeiten der Reaktanden betragen bei der Vernetzungsreaktion 0,2 bis 10 Minuten, vorzugsweise 0,3 bis 5 Minuten. Zweckmäßig werden nach Beendigung der Pfropfreaktion in zwei, der Reaktionszone des Reaktors sich anschließenden Entgasungszonen Spuren von nicht umgesetzten organischen Vernetzungsmitteln und Lösungsmitteln entfernt.

überraschenderweise wurde dabei gefunden, daß die auf diese Weise erhältlichen vernetzten Propylencopolymerisate thermisch noch gut verarbeitbar sind. In der Regel bleiben dabei Teile des erfindungsgemäßen Propylencopolymerisats unvernetzt, so daß dieses noch ausreichend gute Verarbeitungseigenschaften aufweist. Die Schmelzflußindizes der vernetzten Propylencopolymerisate liegen unterhalb von 10 g/10 min, vorzugsweise unterhalb von 5 g/10 min, jeweils gemessen nach DIN 53 735 bei 230°C und 2,16 kg. Die erfindungsgemäßen vernetzten Propylencopolymerisate weisen eine hohe mechanische Stabilität auf.

Die gepfropften Propylencopolymerisate können mit organischen Vernetzungsmitteln auch in der Weise umgesetzt werden, daß vernetzbare Propylencopolymerisate entstehen, welche im vorvernetzten Zustand gut verarbeitbar und auf einfache Weise vernetzbar sind.

Die Herstellung dieser vernetzbaren Propylencopolymerisate erfolgt durch Zumischen der bereits bei der Vernetzungsreaktion beschriebenen organischen Vernetzungsmittel zu den gepfropften Propylencopolymerisaten bei Drücken von 1 bis 500 bar, Temperaturen von weniger als 210°C, Verweilzeiten des Gemisches von weniger als 30 Sekunden und anschließendem raschen Abkühlen des Gemisches. Bevorzugt wird das Zumischen des organischen Vernetzungsmittels bei Drücken von 1 bis 300 bar, Temperaturen von nicht mehr als 200°C und Verweilzeiten von nicht mehr als 25 Sekunden durchgeführt. Auf diese Weise wird erreicht, daß ein noch nicht vernetztes, aber vernetzungsfähiges Gemisch aus dem gepfropften Propylencopolymerisat und dem organischen Vernetzungsmittel entsteht.

Das zu den vernetzbaren Propylencopolymerisaten führende Verfahren kann in den gleichen Reaktoren und mit Ausnahme der Temperaturen und der Verweilzeiten unter den gleichen Verfahrensbedingungen wie die zuvor beschriebene Vernetzungsreaktion durchgeführt werden, so daß bezüglich der Einzelheiten auf die dortige Beschreibung verwiesen wird. Ergänzend sei noch hinzugefügt, daß das Abkühlen des vernetzbaren Gemisches üblicherweise in den Entgasungszonen der dabei verwendeten Reaktoren erfolgt. Das vernetzungsfähige Gemisch wird dabei zunächst auf Temperaturen von weniger als 100°C, bevorzugt auf unter 80°C, abgekühlt und anschließend granuliert.

Das vernetzbare Propylencopolymerisat ist peroxidfrei und, obwohl thermisch vernetzungsfähig, über Monate hinweg lagerfähig und gut verarbeitbar. Sein Schmelzflupindex liegt im Bereich von 5 bis 50, vorzugsweise im Bereich von 5 bis 40 g/10 min (bei 230°C und 2,16 kg, nach DIN 53 735). Durch einfaches Erhitzen kann es anschließend unter Amid- oder Esterbildung in ein vernetztes Produkt mit einem Schmelzflupindex von weniger als 5 g/10 min (230°C und 2,16 kg, nach DIN 53 735) umgewandelt werden, welches eine hohe mechanische Festigkeit und eine gute Haftung an polare Substanzen aufweist.

### Beispiele

Die Beispiele 1 - 4a sowie das Vergleichsbeispiel A wurden in einem Zweischneckenextruder der Firma Werner & Pfleiderer ("ZSK 40") durchgeführt. Die dabei verwendeten Propylencopolymerisate wurden als Grieß oder Granulat dem Zweischneckenextruder zugeführt und dort bei 180°C aufgeschmolzen. Der Polymerdurchsatz im Extruder betrug 20 kg/h, bei 150 Umdrehungen pro Minute.

### Beispiel 1

100 Gew.-Teile eines Propylen-Ethylencopolymerisats mit 77 Gew.-% Propylenhomopolymerisat, 23 Gew.-% Propylen-Ethylencopolymerisat [bestimmt durch Extraktionsfraktionierung nach W. Holtrup, Makromol. Chem. 178, 2335 (1977)], einem Ethylengehalt von 18 Gew.-% [bestimmt durch Fouriertransformations-Infrarotspektroskopie] und einem Schmelzflußindex von 4,0 g/10 min [bei 230°C und 2,16 kg, nach DIN 53 735] wurden im Zweischneckenextruder ZSK 40 bei 180°C aufgeschmolzen, mit 0,16 Gew.-Teilen flüssigem Maleinsäureanhydrid versetzt und bei 260°C zur Reaktion gebracht. Der Druck lag dabei bei 5 bar, die durchschnittliche Verweilzeit der Komponenten betrug 2 Minuten. Nach Beendigung der Pfropfreaktion wurde nicht umgesetztes Maleinsäureanhydrid über nachgeschaltete Entgasungszonen aus der Polymerschmelze entfernt, das Produkt anschließend in einem Wasserbad gekühlt, danach granuliert und getrocknet.

Das dabei erhaltene gepfropfte Propylencopolymerisat ist farb- und geruchlos. Der Gehalt an gepfropftem Maleinsäureanhydrid, die Pfropfausbeute (Gehalt an gepfropftem Maleinsäureanhydrid bezogen auf die Gesamtmenge des eingesetzten Maleinsäureanhydrids), der Schmelzflußindex, die Schlagzähigkeit und die Haftfestigkeit auf Polyamid können der nachstehenden Tabelle 1 entnommen werden.

### Vergleichsbeispiel A

Unter den Bedingungen von Beispiel 1 wurden 100 Gew.-Teile des dabei verwendeten Propylencopolymerisats mit 0,16 Gew.-Teilen Maleinsäureanhydrid gepfropft, wobei im Unterschied dazu zusätzlich 0,01 Gew.-Teile Dicumylperoxid in den Extruder eindosiert wurden.

Das dabei erhaltene Produkt ist gelb gefärbt und riecht stark nach den Zersetzungsprodukten des Peroxids. Infolge eines Molmassenabbaus weist es einen höheren Schmelzflußindex wie das ursprüngliche Propylencopolymerisat auf, die Haftfähigkeit auf Polyamid ist verringert.

Die genauen Ergebnisse können zusammen mit dem Gehalt an Maleinsäureanhydrid und der Pfropfausbeute der nachstehenden Tabelle 1 entnommen werden.

### Beispiel 2

Unter den Bedingungen von Beispiel 1 wurden 100 Gew.-Teile eines Propylen-Ethylencopolymerisats mit 80 Gew.-% Propylenhomopolymerisat, 20 Gew.-% Propylen-Ethylencopolymerisat [bestimmt durch Extraktionsfraktionierung nach W. Holtrup, Makromol. Chem. 178, 2335 (1977)], einem Ethylengehalt von 5 Gew.-% [bestimmt durch Fouriertransformations-Infrarotspektroskopie] und einem Schmelzflußindex von 3,6 g/10 min [bei 230°C und 2,16 kg, nach DIN 53 735] mit 0,08 Gew.-Teilen flüssigem Maleinsäureanhydrid versetzt und bei 260°C zur Reaktion gebracht.

Das dabei erhaltene gepfropfte Propylencopolymerisat ist farb- und geruchlos. Der Gehalt an gepfropftem Maleinsäureanhydrid, die Pfropfausbeute, der Schmelzflußindex, die Schlagzähigkeit und die Haftfestigkeit auf Polyamid können der nachstehenden Tabelle 1 entnommen werden.

### Beispiel 3

Unter den Bedingungen von Beispiel 1 wurden 100 Gew.-Teile eines Propylen-Ethylencopolymerisats, bestehend aus 47 Gew.-% Propylenhomopolymerisat, 53 Gew.-% Propylen-Ethylencopolymerisat, einem Ethylengehalt von 30 Gew.-% und einem Schmelzflußindex von 2,0 g/10 min [bei 230°C und 2,16 kg, nach DIN 53 735] mit 0,15 Gew.-Teilen flüssigem Maleinsäureanhydrid versetzt und bei 260°C zur Reaktion gebracht.

Das dabei erhaltene gepfropfte Propylencopolymerisat ist farb- und geruchlos. Der Gehalt an gepfropftem Maleinsäureanhydrid, die Pfropfausbeute, der Schmelzflußindex, die Schlagzähigkeit und die Haftfestigkeit auf Polyamid können der nachstehenden Tabelle 1 entnommen werden.

### Beispiel 4a

Unter den Bedingungen von Beispiel 1 wurden 100 Gew.-Teile eines Propylen-Ethylencopolymerisats, bestehend aus 80 Gew.-% Propylenhomopolymerisat, 20 Gew.-% Propylen-Ethylencopolymerisat, einem Ethylengehalt von 12 Gew.-% und einem Schmelzflußindex von 2,8 g/10 min [bei 230°C und 2,16 kg, nach DIN 53 735] mit 0,065 Gew.-Teilen flüssigem Maleinsäureanhydrid versetzt und bei 260°C zur Reaktion gebracht.

Das dabei erhaltene gepfropfte Propylencopolymerisat ist farb- und geruchlos. Der Gehalt an gepfropftem Maleinsäureanhydrid, die Pfropfausbeute, der Schmelzflußindex, die Schlagzähigkeit und die Haftfestigkeit auf Polyamid können der nachstehenden Tabelle 1 entnommen werden.

### Beispiel 4b

100 Gew.-Teile des im Beispiel 4a gepfropften Propylencopolymerisats wurden anschließend in einen Zweischneckenextruder der Firma Werner & Pfleiderer ("ZSK 57") zugeführt und dort in einer Aufschmelzzone bei 180°C aufgeschmolzen. In einer nachgeschalteten Zone wurden der Polymerschmelze bei einem Druck von 2 bar 200 mol-%, bezogen auf den Gehalt des gepfropften Comonomeren, an 1,6-Hexandiamin, in Form einer 50 gew.-%igen Lösung in Wasser, hinzugefügt. Das als Vernetzungsmittel dienende 1,6-Hexandiamin wurde homogen eingemischt und in einer daran anschließenden Reaktionszone bei einem Druck von 3 bar, einer Temperatur von 220°C und einer Verweilzeit des Gemisches von 1 Minute mit dem Propylencopolymerisat zur Reaktion gebracht. Nach Beendigung der Vernetzung wurde das nicht umgesetzte Vernetzungsmittel zusammen mit dem Wasser über nachgeschaltete Entgasungszonen aus der Polymerschmelze entfernt, das Produkt anschließend in einem Wasserbad gekühlt, danach granuliert und getrocknet.

Das dabei erhaltene vernetzte Propylencopolymerisat ist farb- und geruchlos und weist gegenüber dem gepfropften, unvernetzten Produkten einen verringerten Schmelzflußindex und eine erhöhte Schlagzähigkeit auf. Die genauen Ergebnisse können der nachstehenden Tabelle 2 entnommen werden.

### Vergleichsbeispiel B

Unter den Bedingungen von Beispiel 4a wurden 100 Gew.-Teile des dabei verwendeten Propylen-Ethylencopolymerisats mit 0,08 Gew.-% Maleinsäureanhydrid gepfropft, wobei im Unterschied dazu zusätzlich 0,01 Gew.-Teile Dicumylperoxid in den Extruder eindosiert wurden.

Das dabei erhaltene Produkt ist gelb gefärbt und riecht stark nach den Zersetzungsprodukten des Peroxids. Sein Schmelzflußindex beträgt 8,1 g/10 min [ bei 230°C und 2,16 kg, nach DIN 53 735], sein Gehalt an gepfropftem Maleinsäureanhydrid 0,06 Gew.-%.

Unter den Bedingungen von Beispiel 4b wurden 100 Gew.-Teile dieses gepfropften Propylencopolymerisats anschließend mit 200 mol-%, bezogen auf den Gehalt des gepfropften Comonomeren, an 1,6-Hexandiamin in Form einer 50 gew.-%igen Lösung in Wasser, zur Reaktion gebracht.

Dabei stellten sich erhebliche Verarbeitungsschwierigkeiten ein, da in diesem Fall die Vernetzungsreaktion nicht mehr kontrolliert werden konnte. Das auf diese Weise vernetzte Produkt wies einen so kleinen Schmelzflußindex auf (0,2 g, bei 190°C und 21,6 kg nach DIN 53 735), daß es nicht mehr weiter extrudiert werden konnte. Der Versuch mußte deshalb abgebrochen werden.

### Beispiel 5

Unter den Bedingungen von Beispiel 4b wurden 100 Gew.-Teile des im Beispiel 4a gepfropften Propylencopolymerisats mit 200 mol-%, bezogen auf den Gehalt des gepfropften Comonomeren, an Diethanolamin vernetzt. Das Diethanolamin wurde dabei in Form einer 50 gew.-%igen Lösung in Wasser verwendet.

Das dabei erhaltene vernetzte Propylencopolymerisat ist farb- und geruchlos und weist gegenüber dem gepfropften, unvernetzten Produkten einen verringerten Schmelzflußindex und eine erhöhte Schlagzähigkeit auf. Die genauen Ergebnisse können der nachstehenden Tabelle 2 entnommen werden.

### Beispiel 6

Unter den Bedingungen von Beispiel 4b wurden 100 Gew.-Teile des im Beispiel 4a gepfropften Propylencopolymerisats mit 100 mol-%, bezogen auf den Gehalt des gepfropften Comonomeren, an 1,6-Hexandiamin vernetzt. Das Vernetzungsmittel wurde dabei in Form einer 50 gew.-%igen Lösung in Wasser verwendet.

Das dabei erhaltene vernetzte Propylencopolymerisat ist farb- und geruchlos und weist gegenüber dem gepfropften, unvernetzten Produkten einen verringerten Schmelzflußindex und eine erhöhte Schlagzähigkeit auf. Die genauen Ergebnisse können der nachstehenden Tabelle 2 entnommen werden.

### Beispiel 7

Unter den Bedingungen von Beispiel 4b wurden 100 Gew.-Teile des im Beispiel 4a gepfropften Propylencopolymerisats mit 50 mol-%, bezogen auf den Gehalt des gepfropften Comonomeren, an 1,6-Hexandiamin vernetzt. Das Vernetzungsmittel wurde dabei in Form einer 50 gew.-%igen Lösung in Wasser verwendet.

Das dabei erhaltene vernetzte Propylencopolymerisat ist farb- und geruchlos und weist gegenüber dem gepfropften, unvernetzten Produkten eines verringerten Schmelzflußindex und eine erhöhte Schlagzähigkeit auf. Die genauen Ergebnisse können der nachstehenden Tabelle 2 entnommen werden.

### Beispiel 8

In diesem Versuch wurden Pfropfung und Vernetzung des Propylencopolymerisats in einem Extruder und in einem Verarbeitungsschritt durchgeführt.

Dabei wurden 100 Gew.-Teile eines Propylen-Ethylencopolymerisats mit 80 Gew.-% Propylenhomopolymerisat, 20 Gew.-% Propylen-Ethylencopolymerisat, einem Ethylengehalt von 12 Gew.-% und einem Schmelzflußindex von 2,8 g/10 min [bei 230°C und 2,16 kg, nach DIN 53 735] in den Einzug eines Zweischneckenextruders der Firma Werner & Pfleiderer ("ZSK 57") eingeführt, bei 180°C aufgeschmolzen und anschließend mit 0,16 Gew.-Teilen flüssigem Maleinsäureanhydrid versetzt. Die eigentliche Pfropfreaktion wurde in der sich daran anschließenden Reaktionszone bei einer Temperatur von 260°C, einem Druck von 2 bar und einer Verweilzeit von 0,8 Minuten durchgeführt. In einer nachfolgenden Entgasungszone wurde die Produktschmelze von flüchtigen Anteilen, insbesondere von nicht umgesetztem Comonomer befreit. Danach wurde das gepfropfte Propylencopolymerisat in eine weitere Reaktionszone gebracht und dort bei einer Temperatur von 220°C, einem Druck von 4 bar und einer Verweilzeit von 0,3 Minuten mit 200 mol-%, bezogen auf den Gehalt des gepfropften Comonomeren, 1,6-Hexamethylendiamin vernetzt. Das Vernetzungsmittel wurde dabei in Form einer 50 gew.-%igen Lösung in Wasser verwendet. Anschließend wurde das nicht umgesetzte Vernetzungsmittel zusammen mit anderen flüchtigen Bestandteilen in einer weiteren Entgasungszone entfernt, das Produkt anschließend in einem Wasserbad gekühlt, danach granuliert und getrocknet.

Das dabei erhaltene vernetzte Propylencopolymerisat ist farb- und geruchlos und weist gegenüber dem zu Beginn des Versuches verwendeten Propylencopolymerisat einen verringerten Schmelzflußindex auf. Die genauen Ergebnisse können der nachstehenden Tabelle 2 entnommen werden.

### Beispiel 9

In diesem Versuch wurde ein vernetzbares Propylencopolymerisat hergestellt.

Dabei wurde unter den Bedingungen von Beispiel 8 zunächst ein gepfropftes Propylencopolymerisat hergestellt und dieses anschließend mit 1,6-Hexamethylendiamin vermischt, wobei im Unterschied dazu die Vermischung bei 200°C und mit einer Verweilzeit von 25 Sekunden erfolgte. Anschließend wurde das Produkt umgehend ausgetragen, in einem Wasserbad abgekühlt und danach granuliert und getrocknet.

Das dabei erhaltene Polymerisat ist vernetzungsfähig, aber noch gut verarbeitbar und weist einen Schmelzflußindex von 6,9 g/10 min [bei 230°C und 2,16 kg, nach DIN 53 735] auf. In Polyethylensäcken kann es monatelang als Granulat aufbewahrt werden.

Nach 10 Monaten wurde aus diesem vernetzungsfähigen Polymerisat in einem Verarbeitungsextruder der Firma Werner & Pfleiderer bei 260°C, einem Druck von 5 bar und einer Verweilzeit von 2 Minuten ein vernetztes Produkt hergestellt.

Das auf diese Weise erhaltene vernetzte Propylencopolymerisat ist farb- und geruchlos und weist gegenüber dem vernetzbaren Ausgangsprodukt einen verringerten Schmelzflußindex auf. Die genauen Ergebnisse können der nachstehenden Tabelle 2 entnommen werden.

**Tabelle 1**

| | Beispiele | | | | Vergleichsbeispiel |
|---|---|---|---|---|---|
| | 1 | 2 | 3 | 4a | A |
| Gehalt an gepfropftem Comonomer [Gew.-Teile pro 100 Gew.-Teile Propylen-Blockcopolymerisat] | 0,13 | 0,06 | 0,14 | 0,05 | 0,11 |
| Pfropfausbeute [%] | 81 | 72 | 93 | 77 | 69 |
| Schmelzflußindex∗ [230°C/2,16 kg] | 4,9 | 9,6 | 11,3 | 5,5 | 8,1 |
| Kerbschlagzähigkeit∗∗[kJ/m²] | 7,3 | 3,0 | ohne Bruch | 6,2 | < 3,0 |
| Haftung auf Polyamid [N/15 mm]∗∗∗ | 15 | 7 | 14 | 7 | 6 |

| | | | | | |
|---|---|---|---|---|---|
| ∗ nach DIN 53 735 | | | | | |
| ∗∗ nach DIN 53 453 bei -20°C | | | | | |
| ∗∗∗ nach EP-A 157 107, Seite 4-5 | | | | | |

**Tabelle 2**

| | Beispiele | | | | | | Vergleichsbeispiel |
|---|---|---|---|---|---|---|---|
| | 4b | 5 | 6 | 7 | 8 | 9 | B |
| Gehalt an gepfropftem Comonomer [Gew.-Teile pro 100 Gew.-Teile Propylen-Blockcopolymerisat] | 0,05 | - | - | - | 0,12 | - | 0,06 |
| Schmelzflußindex∗ [230°C/2,16 kg] | 2,5 | 2,1 | 3,5 | 4,6 | 2,5 | 2,7 | 0,2^{a}[190°C/21,6kg] |
| Kerbschlagzähigkeit∗∗[kJ/m²] | 9,2 | 9,0 | 8,8 | 8,5 | 8,3 | 8,2 | - |

| | | | | | | | |
|---|---|---|---|---|---|---|---|
| ∗ nach DIN 53 735 | | | | | | | |
| ∗∗ nach DIN 53 453 bei -20°C | | | | | | | |
| ^{a} nach DIN 53 735 | | | | | | | |

Die Beispiele 10 - 12, sowie das Vergleichsbeispiel C wurden ebenfalls in einem Zweischneckenextruder der Firma Werner & Pfleiderer ("ZSK 40") durchgeführt. Die dabei verwendeten statistisch verteilten Propylencopolymerisate wurden als Griep oder Granulat dem Zweischneckenextruder zugeführt und dort bei 180°C aufgeschmolzen. Der Polymerdurchsatz im Extruder betrug 20 kg/h, bei 150 Umdrehungen pro Minute.

### Beispiel 10

100 Gewichtsteile eines Propylen-Ethylen-Copolymerisats mit einem Ethylengehalt von 2,1 Gew.-% [bestimmt durch Fouriertransformations-Infrarotspektroskopie], einem Schmelzflupindex von 1,8 g/10 min. [bei 230°C und 2,16 kg, nach DIN 53 735] und einem Schmelzpunkt von 149°C wurden im Zweischneckenextruder "ZSK 40" bei 180°C aufgeschmolzen, mit 0,12 Gew.-Teilen flüssigem Maleinsäureanhydrid versetzt und bei 260°C, einem Druck von 4 bar und einer durchschnittlichen Verweilzeit des Gemisches von 2 Minuten zur Reaktion gebracht. Nach Beendigung der Pfropfreaktion wurde nicht umgesetztes Maleinsäureanhydrid über nachgeschaltete Entgasungszonen aus der Polymerschmelze entfernt, das Produkt anschließend in einem Wasserbad gekühlt, danach granuliert und getrocknet.

Das dabei erhaltene gepfropfte, statistisch verteilte Propylencopolymerisat ist farb- und geruchlos. Der Gehalt an gepfropftem Maleinsäureanhydrid, die Pfropfausbeute (Gehalt an gepfropften Maleinsäureanhydrid bezogen auf die Gesamtmenge des eingesetzten Maleinsäureanhydrids), der Schmelzflupindex, die xylollöslichen Anteile und die Haftfähigkeit auf Polyamid können der nachstehenden Tabelle 3 entnommen werden.

### Vergleichsbeispiel C

Unter den Bedingungen von Beispiel 10 wurden 100 Gew.-Teile des dabei verwendeten statistisch verteilten Propylen-Ethylen-Copolymerisats mit 0,12 Gew.-Teilen Maleinsäureanhydrid gepfropft, wobei im Unterschied dazu zusätzlich 0,01 Gew.-Teile Dicumylperoxid in den Extruder eindosiert wurden.

Das dabei erhaltene Produkt ist gelb gefärbt und riecht stark nach den Zersetzungsprodukten des Peroxids. Infolge eines Molmassenabbaus weist es einem höheren Schmelzflupindex wie das ursprünglich eingesetzte Propylen-Ethylen-Copolymerisat auf, die Haftfähigkeit auf Polyamid, ist verringert, die xylollöslichen Anteile sind erhöht. Die genauen Ergebnisse können zusammen mit dem Gehalt an Maleinsäureanhydrid und der Pfropfausbeute der nachstehenden Tabelle 3 entnommen werden.

### Beispiel 11

Unter den Bedingungen von Beispiel 10 wurden 100 Gew.-Teile eines statistisch verteilten Propylen-Ethylen-Copolymerisats mit einem Ethylengehalt von 7,2 Gew.-% [bestimmt durch Fouriertransformations-Infrarotspektroskopie], einem Schmelzflußindex von 6,0 g/10 min. [bei 230°C und 2,16 kg, nach DIN 53 735] und einem Schmelzpunkt von 124°C mit 0,23 Gew.-Teilen flüssigem Maleinsäureanhydrid versetzt und bei 260°C zur Reaktion gebracht.

Das dabei erhaltene gepfropfte Propylen-Ethylen-Copolymerisat ist farb- und geruchlos. Der Gehalt an gepfropftem Maleinsäureanhydrid, die Propfausbeute, der Schmelzflupindex, die xylollöslichen Anteile und die Haftfestigkeit auf Polyamid können der nachstehenden Tabelle 3 entnommen werden.

### Beispiel 12

Unter den Bedingungen von Beispiel 10 wurden 100 Gew.-Teile eines statistisch verteilten Propylen-Ethylen-But-1-en-Copolymerisats mit einem Ethylengehalt von 3,9 Gew.-% und einem But-1-engehalt von 2,0 Gew.-%, einem Schmelzflupindex von 7,0 g/10 min. [bei 230°C und 2,16 kg, nach DIN 53 735] und einem Schmelzpunkt von 130°C mit 0,18 Gew.-Teilen Maleinsäureanhydrid versetzt und bei 260°C zur Reaktion gebracht.

Das dabei erhaltene gepfropfte Propylen-Ethylen-But-l-en-Copolymerisat ist farb- und geruchslos. Der Gehalt an gepfropftem Maleinsäureanhydrid, die Pfropfausbeute, der Schmelzflupindex, die xylollöslichen Anteile und die Haftfestigkeit auf Polyamid können der nachstehenden Tabelle 3 entnommen werden.

### Beispiel 13

100 Gew.-Teile des im Beispiel 11 gepfropften Propylen-Ethylen-Copolymerisats wurden anschließend in einen Zweischneckenextruder der Firma Werner & Pfeiderer ("ZSK 57") eingetragen und dort in der Aufschmelzzone bei 180°C geschmolzen. In einer nachgeschalteten Zone wurden der Polymerschmelze bei einem Druck von 2 bar 200 mol-%, bezogen auf den Gehalt des gepfropften Comonomeren, an 1,6-Hexandiamin, in Form einer 50 gew.-%igen Lösung in Wasser, hinzugefügt. Das als Vernetzungsmittel verwendete 1,6-Hexandiamin wurde homogen eingemischt und in einer daran anschließenden Reaktionszone bei einem Druck von 5 bar, einer Temperatur von 220°C und einer mittleren Verweilzeit von 2 Minuten mit dem Propylen-Ethylen-Copolymerisat zur Reaktion gebracht. Nach Beendigung der Vernetzung wurde das nicht umgesetzte Vernetzungsmittel zusammen mit dem Wasser über nachgeschaltete Entgasungszonen aus der Polymerschmelze entfernt, das Produkt anschließend in einem Wasserbad gekühlt, danach granuliert und getrocknet.

Das dabei erhaltene vernetzte Propylen-Ethylen-Copolymerisat ist farb- und geruchlos und weist gegenüber den gepfropften, unvernetzten Produkten einen verringerten Schmelzflupindex und abgesenkte xylollösliche Anteile auf. Die genauen Ergebnisse können der nachstehenden Tabelle 3 entnommen werden.

### Vergleichsbeispiel D

Unter den Bedingungen Von Beispiel 11 wurden 100 Gew.-Teile des dabei verwendeten Propylen-Ethylen-Copolymerisats mit 0,27 Gew.-% flüssigem Maleinsäureanhydrid versetzt und bei 260°C zur Reaktion gebracht, wobei im Unterschied dazu die Pfropfung in Anwesenheit von 0,01 Gew.-Teilen Dicumylperoxid erfolgte.

Das dabei erhaltene Produkt ist gelb gefärbt und riecht stark nach den Zersetzungsprodukten des Peroxids. Sein Schmelzflupindex beträgt 14,8 g/min. [bei 230°C und 2,16 kg, nach DIN 53 735], sein Gehalt angepfropftem Maleinsäureanhydrid 0,24 Gew.-%. Unter den Bedingungen von Beispiel 13 wurden anschließend 100 Gew.-Teile dieses gepfropften Propylen-Ethylen-Copolymerisats mit 200 mol-%, bezogen auf den Gehalt des gepfropften Comonomeren, an 1,6-Hexandiamin in Form einer 50 gew.-%igen Lösung in Wasser zur Reaktion gebracht.

Dabei stellten sich erhebliche Verarbeitungsschwierigkeiten ein, da in diesem Fall die Vernetzungsreaktion nicht mehr kontrolliert werden konnte. Das auf diese Weise vernetzte Produkt wies einen so kleinen Schmelzflußindex auf (1,0 g/10 min, bei 190°C und 21,6 kg nach DIN 53 735), daß es nicht mehr weiter extrudiert werden konnte. Der Versuch mußte daher abgebrochen werden.

### Beispiel 14

In diesem Versuch wurde ein vernetzbares Propylen-Ethylen-Copolymerisat hergestellt.

Dabei wurde das im Beispiel 11 hergestellte Propylen-Ethylen-Copolymerisat gemäß dem Beispiel 13 mit 200 mol-%, bezogen auf den Gehalt des gepfropften Comonomeren, an 1,6-Hexandiamin, versetzt, wobei im Unterschied dazu die Zumischung des Vernetzungsmittels bei einer Temperatur von 198°C und einer mittleren Verweilzeit von 20 Sekunden erfolgte. Anschliepend wurde das Produkt umgehend ausgetragen, in einem Wasserbad abgekühlt und danach granuliert und getrocknet.

Das dabei erhaltene Polymerisat ist vernetzungsfähig, aber noch gut verarbeitbar und weist einen Schmelzflupindex von 7,1 g/10 min. (bei 230°C und 2,16 g, nach DIN 53 735) auf. In Polyethylensäcken kann es monatelang als Granulat aufbewahrt werden.

Nach 10 Monaten wurde aus diesem vernetzungsfähigen Polymerisat in einem Verarbeitungsextruder der Firma Werner & Pfleiderer bei 260°C, einem Druck von 4 bar und einer Verweilzeit von 2 Minuten ein vernetztes Produkt hergestellt.

Das auf diese Weise erhaltene vernetzte Propylen-Ethylencopolymerisat ist farb- und geruchlos und weist gegenüber dem vernetzbaren Ausgangsprodukt einen verringerten Schmelzflupindex auf. Die genauen Ergebnisse können der nachstehenden Tabelle 3 entnommen werden.

In den Beispielen 15 bis 17 wurden Natrium- bzw. Zinkionomere von gepfropften Propylen-Ethylencopolymeren hergestellt.

### Beispiele 15, 15a und 15b

Unter den Bedingungen von Beispiel 1 wurden 100 Gew.-Teile eines Propylen-Ethylencopolymerisats mit 80 Gew.-% Propylenhomopolymerisat, 20 Gew.-% Propylen-Ethylencopolymerisat [bestimmt durch Extraktionsfraktionisierung nach W. Holtrup, Makromol. Chem. 178, 2335(1977)], einem Ethylengehalt von 8,2 Gew.-% [bestimmt durch Fouriertransformations-Infrarotspektroskopie] und einem Schmelzflupindex von 2 g/10 min [bei 230°C und 2,16 kg, nach DIN 53 735] mit 0,12 Gew.-Teilen flüssigem Maleinsäureanhydrid versetzt und bei 260°C zur Reaktion gebracht. Das dabei erhaltene Produkt ist farb- und geruchlos. Der Schmelzflupindex, die Schlagzähigkeit und die xylollöslichen Anteile können der nachstehenden Tabelle 4 entnommen werden.

100 Gew.-Teile dieses gepfropften Propylencopolymerisates wurden anschließend in einem Zweischneckenextruder der Firma Werner & Pfleiderer ("ZSK 40") in einer Aufschmelzzone bei 180°C aufgeschmolzen. In einer nachgeschalteten Zone wurden der Polymerschmelze 0,2 Gew.-Teile Natriumacetat bzw. 0,27 Gew.-Teile Zinkacetat hinzugefügt und in einer daran anscthließenden Reaktionszone, einer Temperatur von 240°C und einer Verweilzeit des jeweiligen Gemisches von 2 Minuten zur Reaktion gebracht. Das Produkt wurde in einem Wasserbad abgekühlt, danach granuliert und getrocknet.

Die dabei erhaltenen Natrium- bzw. Zinkionomeren sind farb- und geruchlos. Wie der nachstehenden Tabelle 4 entnommen werden kann, weisen die Ionomeren gegenüber dem gepfropften Propylencopolymerisat einen niedrigeren Schmelzflupindex und insbesondere das Zinkionomere einen stark erniedrigten Gehalt an xylollöslichen Anteilen auf.

### Beispiel 16

Unter den Bedingungen von Beispiel 1 wurden 100 Gew.-Teile eines Propylen-Ethylencopolymerisates mit 50 Gew.-% Propylenhomopolymerisat, 50 Gew.-% Propylen-Ethylencopolymerisat [bestimmt durch Extraktionsfraktionierung nach W. Holtrup, Makromol. Chem. 178, 2335 (1977)], einem Ethylengehalt von 26 Gew.-% [bestimmt durch Fouriertransformations-Infrarotspektroskopie] und einem Schmelzflupindex von 1 g/10 min [bei 230°C und 2,16 kg, nach DIN 53 735] mit 0,17 Gew.-Teilen flüssigem Maleinsäureanhydrid versetzt und bei 260°C zur Reaktion gebracht. Das dabei erhaltene Produkt ist farb- und geruchlos. Der Schmelzflupindex, die Schlagzähigkeit und die xylollöslichen Anteile können der nachstehenden Tabelle entnommen werden.

100 Gew.-Teile dieses gepfropften Propylencopolymerisates wurden wie in den Beispielen 16a und 15b beschrieben mit 0,28 Gew.-Teilen Natriumacetat bzw. 0,38 Gew.-Teilen Zinkacetat umgesetzt.

Die dabei erhaltenen Natrium- bzw. Zinkionomeren sind farb- und geruchlos. Wie der nachstehenden Tabelle 4 entnommen werden kann, weisen die Ionomeren gegenüber dem gepfropften Propylencopolymerisat niedrigere Schmelzflußindices und insbesondere das Zinkionomere einen erniedrigten Gehalt an xylollöslichen Anteilen auf.

### Beispiele 17, 17a und 17b

Unter den Bedingungen von Beispiel 10 wurden 100 Gew.-Teile eines statistisch verteilten Propylen-Ethylencopolymerisates mit einem Ethylengehalt von 3,4 Gew.-% [bestimmt durch Fouriertransformations-Infrarotspektroskopie] und einem Schmelzflupindex von 2 g/10 min mit 0,12 Gew.-Teilen flüssigem Maleinsäureanhydrid gepfropft. Das erhaltene Produkt ist farb- und geruchlos. Der Schmelzflußindex, die Schlagzähigkeit und die xylollöslichen Anteile können der nachstehenden Tabelle 4 entnommen werden.

100 Gew.-Teile des dabei erhaltenen gepfropften statistisch verteilten Propylen-Ethylencopolymerisates wurden wie in den Beispielen 15a und 15b beschrieben mit 0,2 Gew.-Teilen Natriumacetat bzw. 0,27 Gew.-Teilen Zinkacetat umgesetzt.

Die dabei erhaltenen Natrium- bzw. Zinkionomeren sind farb- und geruchlos. Wie der nachstehenden Tabelle 4 entnommen werden kann, weist das Zinkionomere gegenüber dem gepfropften statistisch verteilten Propylencopolymerisat einen niedrigen Schmelzflupindex und einen niedrigeren Gehalt an xylollöslichen Anteilen auf.

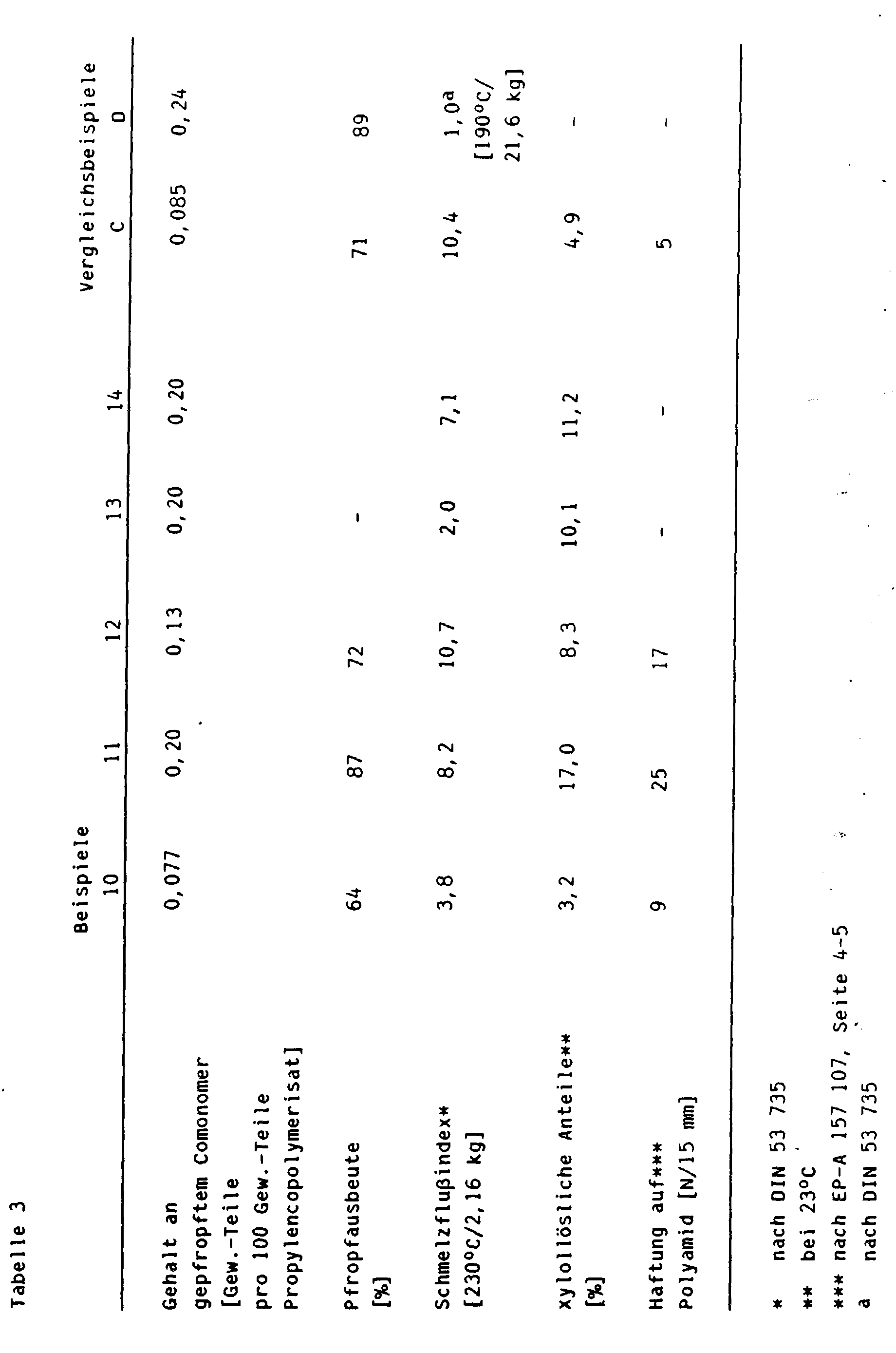

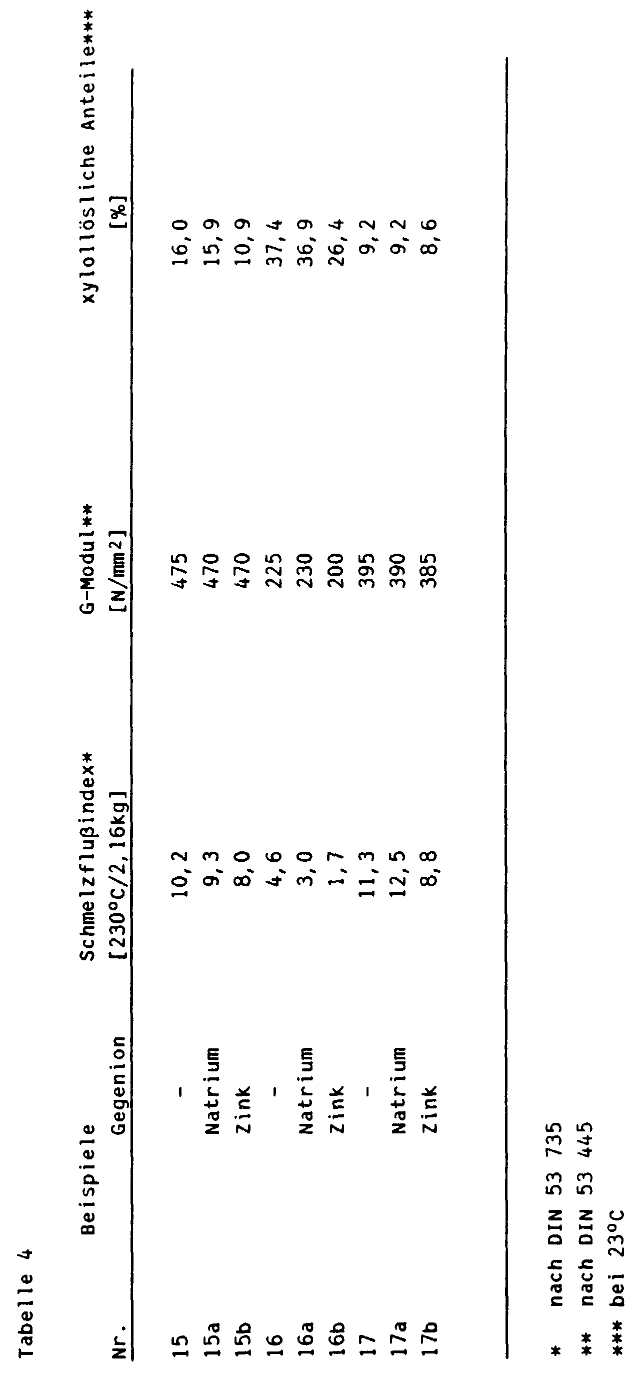

## Patentansprüche (Patentansprüche für folgende(n) Vertragsstaat(en): AT, BE, DE, FR, GB, IT, NL)

1. Vernetzte Propylencopolymerisate mit bis zu 35 Gew.-% anderer C₂- bis C₁₀-Alk-1-ene, und gepfropften, α,β-ethylenisch ungesättigten Carbonsäuren bzw. Carbonsäurederivaten, erhältlich durch Umsetzung des zu pfropfenden Monomeren mit einem Propylencopolymerisat bei Drücken von 1 bis 500 bar, wobei man in Abwesenheit eines radikalisch zerfallenden Initiators 0,01 bis 1,0 Gew.-%, bezogen auf das Propylencopolymerisat, des zu pfropfenden Monomeren, dem aufgeschmolzenen Propylencopolymerisat hinzumischt, die Pfropfreaktion bei Temperaturen von 210 bis 350°C durchführt und danach die so erhältlichen gepfropften Propylencopolymerisate mit organischen Vernetzungsmitteln bei Drücken von 1 bis 500 bar und Temperaturen von 210 bis 350°C umsetzt.

2. Vernetzte Propylencopolymerisate nach Anspruch 1, erhältlich durch Umsetzung des zu pfropfenden Monomeren mit einem Propylencopolymerisat, das aus 40 bis 95 Gew.-% eines Propylenhomopolymerisats und 5 bis 60 Gew.-% eines statistischen Propylencopolymerisats mit einpolymerisierten C₂- bis C₁₀-Alk-1-enen besteht.

3. Vernetzte Propylencopolymerisate nach Anspruch 1, erhältlich durch Umsetzung des zu pfropfenden Monomeren mit einem statistisch verteilten Propylencopolymerisat mit bis zu 20 Gew.-% anderer C₂- bis C₁₀-Alk-1-ene.

4. Verfahren zur Herstellung von vernetzten Propylencopolymerisaten gemäß den Ansprüchen 1 bis 3, dadurch gekennzeichnet, daß man die gepfropften Propylencopolymerisate mit organischen Vernetzungsmitteln bei Drücken von 1 bis 500 bar und Temperaturen von 210 bis 350°C umsetzt.

## Patentansprüche (Patentansprüche für folgende(n) Vertragsstaat(en): ES)

1. Verfahren zur Herstellung von mit α,β - ethylenisch ungesättigten Carbonsäuren bzw. Carbonsäurederivaten geproften und vernetzten Propylencopolymerisaten mit bis zu 35 Gew.-% anderer C₂- bis C₁₀-Alk-1-ene durch Umsetzung des zu pfropfenden Monomeren mit einem Propylencopolymerisat bei Drücken von 1 bis 500 bar, dadurch gekennzeichnet, daß man in Abwesenheit eines radikalisch zerfallenden Initiators 0,01 bis 1,0 Gew.-%, bezogen auf das Propylencopolymerisat, des zu pfropfenden Monomeren, dem aufgeschmolzenen Propylencopolymerisat hinzumischt, die Pfropfreaktion bei Temperaturen von 210 bis 350°C durchführen und danach die so erhältlichen gepfropften Propylencopolymerisate mit organischen Vernetzungsmitteln bei Drücken von 1 bis 500 bar und Temperaturen von 210 bis 350°C umsetzt.

2. Verfahren nach Anspruch 1, dadurch gekennzeichnet, daß das zu pfropfende Monomere mit einem Propylencopolymerisat umgesetzt wird, das aus 40 bis 95 Gew.-% eines Propylenhomopolymerisats und 5 bis 60 Gew.-% eines statistischen Propylencopolymerisats mit einpolymerisierten C₂- bis C₁₀-Alk-1-enen besteht.

3. Verfahren nach Anspruch 1, dadurch gekennzeichnet, daß das zu pfropfende Monomere mit einem statistisch verteilten Propylencopolymerisat mit bis zu 20 Gew.-%, anderer C₂- bis C₁₀-Alk-1-ene umgesetzt wird.

## Claims (Claims for the following Contracting State(s): AT, BE, DE, FR, GB, IT, NL)

1. A crosslinked propylene copolymer containing up to 35% by weight of other C₂- to C₁₀-alk-1-enes and grafted, α,β-ethylenically unsaturated carboxylic acids or carboxylic acid derivatives, obtainable by reacting the monomer to be grafted with a propylene copolymer at a pressure of from 1 to 500 bar, where from 0.01 to 1.0% by weight, based on the propylene copolymer, of the monomer to be grafted is added to the molten propylene copolymer in the absence of an initiator which decomposes to form free radicals, the grafting reaction is carried out at from 210 to 350°C, and the resultant grafted propylene copolymers are then reacted with organic crosslinking agents at pressures of from 1 to 500 bar and at from 210 to 350°C.

2. A crosslinked propylene copolymer as claimed in claim 1, obtainable by reacting the monomer to be grafted with a propylene copolymer which comprises from 40 to 95% by weight of a propylene homopolymer and from 5 to 60% by weight of a random propylene copolymer containing copolymerized C₂- to C₁₀-alk-1-enes.

3. A crosslinked propylene copolymer as claimed in claim 1, obtainable by reacting the monomer to be grafted with a random propylene copolymer containing up to 20% by weight of other C₂- to C₁₀-alk-1-enes.

4. A process for the preparation of crosslinked propylene copolymers as claimed in claims 1 to 3, which comprises reacting the grafted propylene copolymers with organic crosslinking agents at pressures of from 1 to 500 bar and at from 210 to 350°C.

## Claims (Claims for the following Contracting State(s): ES)

1. A process for the preparation of propylene copolymers containing up to 35% by weight of other C₂- to C₁₀-alk-1-enes and grafted and crosslinked with α,β-ethylenically unsaturated carboxylic acids or carboxylic acid derivatives, by reacting the monomer to be grafted with a propylene copolymer at a pressure of from 1 to 500 bar, where from 0.01 to 1.0% by weight, based on the propylene copolymer, of the monomer to be grafted is added to the molten propylene copolymer in the absence of an initiator which decomposes to form free radicals, the grafting reaction is carried out at from 210 to 350°C, and the resultant grafted propylene copolymers are then reacted with organic crosslinking agents at pressures of from 1 to 500 bar and at from 210 to 350°C.

2. A process as claimed in claim 1, wherein the monomer to be grafted is reacted with a propylene copolymer which comprises from 40 to 95% by weight of a propylene homopolymer and from 5 to 60% by weight of a random propylene copolymer containing copolymerized C₂- to C₁₀-alk-1-enes.

3. A process as claimed in claim 1, wherein the monomer to be grafted is reacted with a random propylene copolymer containing up to 20% by weight of other C₂- to C₁₀-alk-1-enes.

## Revendications (Revendications pour l'(les) Etat(s) contractant(s) suivant(s): AT, BE, DE, FR, GB, IT, NL)

1. Copolymères réticulés de propylène avec jusqu'à 35% en poids d'autres alcènes-1 en C₂-C₁₀, greffés avec des acides carboxyliques ou des dérivés d'acides carboxyliques à insaturation α, β-éthylénique, pouvant être obtenus par réaction du monomère à greffer avec un copolymère de propylène sous une pression de 1 à 500 bar, en mélangeant au copolymère de propylène fondu, en l'absence d'un amorceur radicalaire, 0,01 à 1,0% en poids, par rapport au copolymère de propylène, du monomère à greffer, en conduisant la réaction de greffage à une température de 210 à 350°C, puis en faisant réagir le copolymère de propylène greffé ainsi obtenu avec un réticulant organique sous une pression de 1 à 500 bar et à une température de 210 à 350°C.

2. Copolymères réticulés de propylène selon la revendication 1, obtenus par réaction du monomère à greffer avec un copolymère de propylène qui se compose de 40 à 95% en poids d'un homopolymère de propylène et de 5 à 60% en poids d'un copolymère statistique de propylène contenant des alcènes-1 en C₂-C₁₀ en liaison polymère.

3. Copolymères réticulés de propylène selon la revendication 1, obtenus par réaction du monomère à greffer avec un copolymère statistique de propylène contenant jusqu'à 20% en poids d'autres alcènes-1 en C₂-C₁₀.

4. Procédé de préparation de copolymères réticulés de propylène selon l'une quelconque des revendications 1 à 3, caractérisé en ce que l'on fait réagir les copolymères greffés de propylène avec des réticulants organiques sous des pressions de 1 à 500 bar et à des températures de 210 à 350°C.

## Revendications (Revendications pour l'(les) Etat(s) contractant(s) suivant(s): ES)

1. Procédé de préparation de copolymères de propylène avec jusqu'à 35% en poids d'autres alcènes-1 en C₂-C₁₀, greffés avec des acides carboxyliques ou des dérivés d'acides carboxyliques à insaturation α,β-éthylénique et réticulés, par réaction du monomère à greffer avec un copolymère de propylène sous une pression de 1 à 500 bar, caractérisé en ce que l'on mélange au copolymère de propylène fondu, en l'absence d'un amorceur radicalaire, 0,01 à 1,0% en poids, par rapport au copolymère de propylène, du monomère à greffer, on conduit la réaction de greffage à une température de 210 à 350°C, puis on fait réagir les copolymères de propylène greffés ainsi obtenus avec des réticulants organiques sous des pressions de 1 à 500 bar et à des températures de 210 à 350°C.

2. Procédé selon la revendication 1, caractérisé en ce que le monomère à greffer est mis en réaction avec un copolymère de propylène qui se compose de 40 à 95% en poids d'un homopolymére de propylène et de 5 à 60% en poids d'un copolymère statistique de propylène contenant des alcènes-1 en C₂-C₁₀ en liaison polymère.

3. Procédé selon la revendication 1, caractérisé en ce que le monomère à greffer est mis en réaction avec un copolymère statistique de propylène contenant jusqu'à 20% en poids d'autres alcènes-1 en C₂-C₁₀.
